# EUROPEAN PATENT APPLICATION

(11) **EP 4 844 913 A1**
(43) Date of publication of application: **25.11.2026**
(21) Application number: 26166099.7
(22) Date of filing: 19.03.2026
(51) Int. Cl.: H01M 50/209, B60L 50/00, H01M 10/42, H01M 10/48, H01M 10/63, H01M 10/613, H01M 10/625, H01M 10/647, H01M 10/6553, H01M 10/6556, H01M 10/6568, H01M 50/249, H01M 50/271

(54) **VEHICLE AND DIAGNOSTIC DEVICE FOR ENERGY STORAGE DEVICE**

(30) Priority: 23.05.2025 JP 2025086372
(71) Applicant: Toyota Jidosha Kabushiki Kaisha, Toyota-shi, Aichi-ken 471-8571 (JP)
(72) Inventor: NISHIGAKI, Mina, Toyota-shi, 471-8571 (JP)
(74) Representative: D Young & Co LLP

(57) **Abstract**

The vehicle includes an energy storage device, a camera, and a control device. The energy storage device includes: a housing case; an energy storage stack that is housed in the housing case and includes a plurality of energy storage cells arranged in an arrangement direction; a pair of end plates disposed on both sides of the energy storage stack in the arrangement direction; and a restraining band that is connected to the end plates and restrains the energy storage stack from both sides in the arrangement direction. The camera is configured to acquire an image of an imaging region that is at least part of a surface of the restraining band. The control device is configured to determine whether the restraining band has deteriorated based on the state of rust shown in the image.

## Description

### BACKGROUND OF THE INVENTION

### 1. Field of the Invention

The present disclosure relates to vehicles and diagnostic devices for energy storage devices.

### 2. Description of Related Art

Japanese Unexamined Patent Application Publication No. 2021-72168 (JP 2021-72168 A) discloses a battery pack (energy storage device). This battery pack includes a plurality of secondary cells (energy storage cells) arranged in one direction, a pair of end plates disposed at both ends of the secondary cells, and a restraining band surrounding the secondary cells and the end plates. This battery pack can maintain a state in which a predetermined restraining load acts on the secondary cells.

### SUMMARY OF THE INVENTION

Typically, a plurality of energy storage cells is housed in a housing case. If the restraining band deteriorates due to moisture contained in the housing case, the restraining band may rupture. If the restraining band ruptures, it hinders travel of the vehicle. Therefore, it is desired to determine whether the restraining band has deteriorated.

The present disclosure has been made to address the above issue, and one object thereof is to determine whether a restraining band has deteriorated.
(1) A vehicle according to an aspect of the present disclosure includes an energy storage device, a camera, and a control device. The energy storage device includes: a housing case; an energy storage stack that is housed in the housing case and includes a plurality of energy storage cells arranged in an arrangement direction; a pair of end plates disposed on both sides of the energy storage stack in the arrangement direction; and a restraining band that is connected to the end plates and restrains the energy storage stack from both sides in the arrangement direction. The camera is configured to acquire an image of an imaging region that is at least part of a surface of the restraining band. The control device is configured to determine whether the restraining band has deteriorated based on the state of rust shown in the image.
(2) The vehicle according to (1) further includes a cooling device configured to draw air from a vehicle cabin to cool the energy storage stack.
(3) The vehicle according to (1) or (2) further includes a notification device. The notification device is configured to notify that the energy storage device needs to be replaced when the control device determines that the restraining band has deteriorated.
(4) In the vehicle according to (1) or (2), the restraining band includes a first portion connected to one of the end plates, and a second portion other than the first portion. A first member is exposed in the first portion. The first member is covered with a second member in the second portion. The imaging region is located in the first portion.
(5) In another aspect of the present disclosure, a diagnostic device for an energy storage device is provided. The energy storage device includes: a housing case; an energy storage stack that is housed in the housing case and includes a plurality of energy storage cells arranged in an arrangement direction; a pair of end plates disposed on both sides of the energy storage stack in the arrangement direction; and a restraining band that is connected to the end plates and restrains the energy storage stack from both sides in the arrangement direction. The diagnostic device includes: a camera configured to acquire an image of an imaging region that is at least part of a surface of the restraining band; and a control device configured to determine whether the restraining band has deteriorated based on the state of rust shown in the image.

According to the present disclosure, it is possible to determine whether a restraining band has deteriorated.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically showing the overall configuration of a vehicle according to an embodiment;
FIG. 2 is a schematic exploded perspective view of an energy storage device 100;
FIG. 3 is a perspective view schematically showing an energy storage stack 11 from which a supply duct 63 and a discharge duct 65 shown in FIG. 2 have been removed;
FIG. 4 is a diagram showing the flow of air through the supply duct 63, a resin frame 64, and the discharge duct 65; and
FIG. 5 is a flowchart showing determination processing executed by an ECU 500.

### DETAILED DESCRIPTION OF EMBODIMENTS

Hereinafter, an embodiment and modifications of the present disclosure will be described in detail with reference to the drawings. The same or corresponding portions are denoted by the same signs throughout the drawings, and description thereof will not be repeated.

### Embodiment

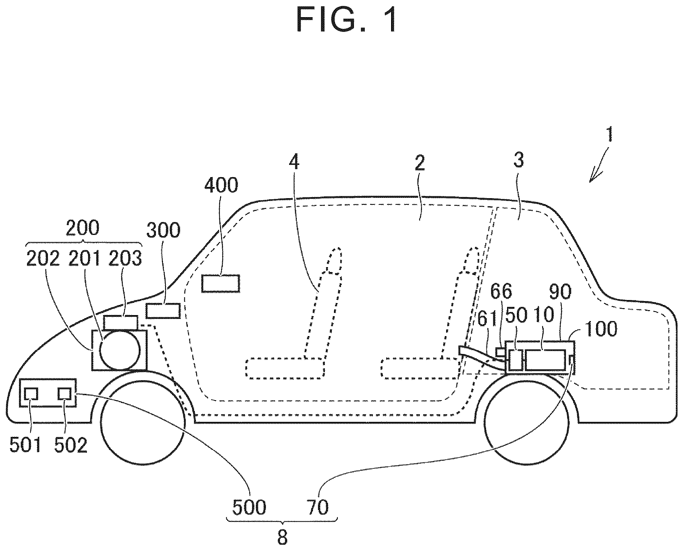

FIG. 1 is a diagram schematically showing the overall configuration of a vehicle according to an embodiment. A vehicle 1 according to the present embodiment is, for example, a hybrid electric vehicle (HEV).

The vehicle 1 includes an energy storage device 100, a drive device 200, an air-conditioning system 300, a human machine interface (HMI) device 400, and an electronic control unit (ECU) 500. The vehicle 1 is configured to run on electric power supplied from the energy storage device 100.

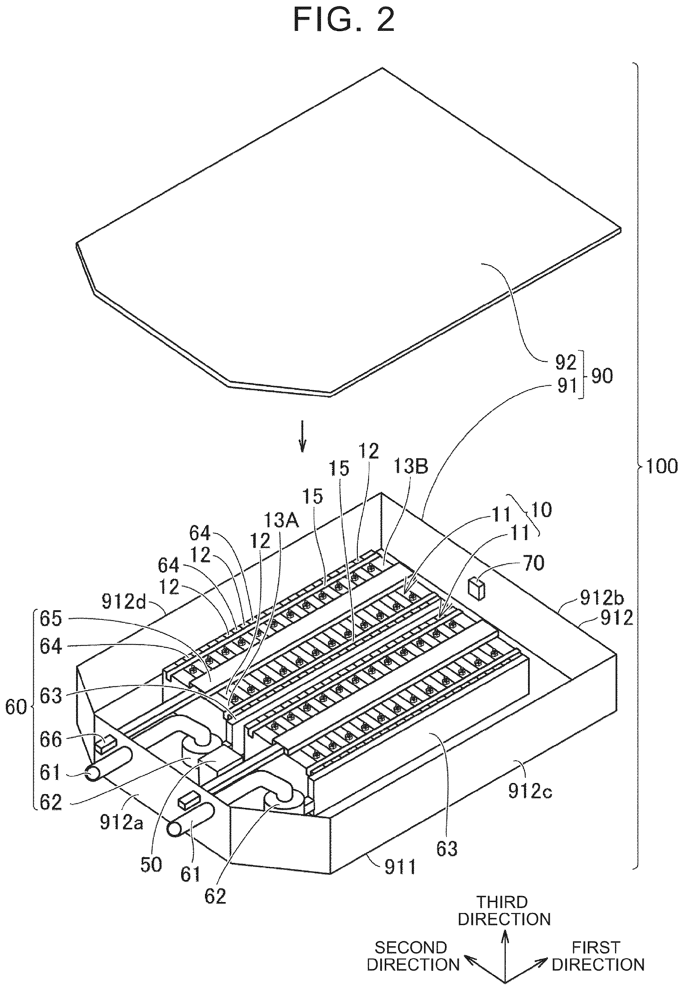

The energy storage device 100 stores electric power for vehicle travel. The energy storage device 100 includes a battery 10, a system main relay (SMR) 50, a cooling device 60 (see FIG. 2), a camera 70, and a housing case 90.

The drive device 200 includes a motor generator (MG) 201, an engine 202, and a power control unit (PCU) 203. The MG 201 generates driving force for the vehicle 1 to travel. The MG 201 also performs regenerative power generation during deceleration of the vehicle 1. The engine 202 is an internal combustion engine such as a gasoline engine, and generates driving force for the vehicle 1 to travel. The PCU 203 converts electric power between the battery 10 and the MG 201. The PCU 203 drives the MG 201 using electric power supplied from the battery 10. The PCU 203 supplies the battery 10 with electric power generated by regenerative power generation performed by the MG 201.

The SMR 50 is electrically connected on a power line connecting the battery 10 and the PCU 203. When the SMR 50 is closed (ON) in response to a control signal from the ECU 500, electric power can be transferred between the battery 10 and the PCU 203.

The vehicle 1 includes a vehicle cabin 2 in which seats 4 for occupants are disposed, and a luggage compartment 3. The air-conditioning system 300 conditions (cools and heats) air in the vehicle cabin 2.

The HMI device 400 is an example of the "notification device" in the present disclosure. The HMI device 400 includes an input device and a display device. The HMI device 400 may include a touch panel display.

The ECU 500 is an example of the "control device" in the present disclosure. The ECU 500 includes a central processing unit (CPU) 501 and a memory 502. The memory 502 includes read-only memory (ROM) and random access memory (RAM). The ECU 500 controls each device such that the vehicle 1 is brought into a desired state based on signals from various sensors (not shown), and maps and programs stored in the memory 502. Main processing executed by the ECU 500 includes determination processing for determining whether a restraining band of the energy storage device 100 has deteriorated.

The vehicle 1 includes a diagnostic device 8 that diagnoses the energy storage device 100. The diagnostic device 8 includes the camera 70 and the ECU 500. The diagnostic device 8 is an example of the "diagnostic device for an energy storage device" in the present disclosure. In the present embodiment, the diagnostic device 8 is mounted on the vehicle 1 and diagnoses the energy storage device 100 mounted on the vehicle 1, more specifically, a restraining band of the battery 10.

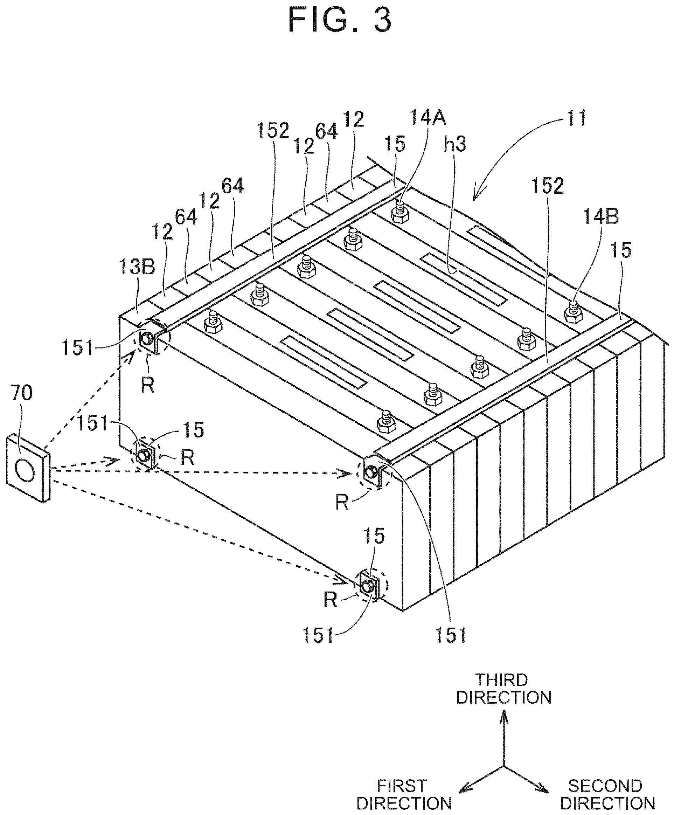

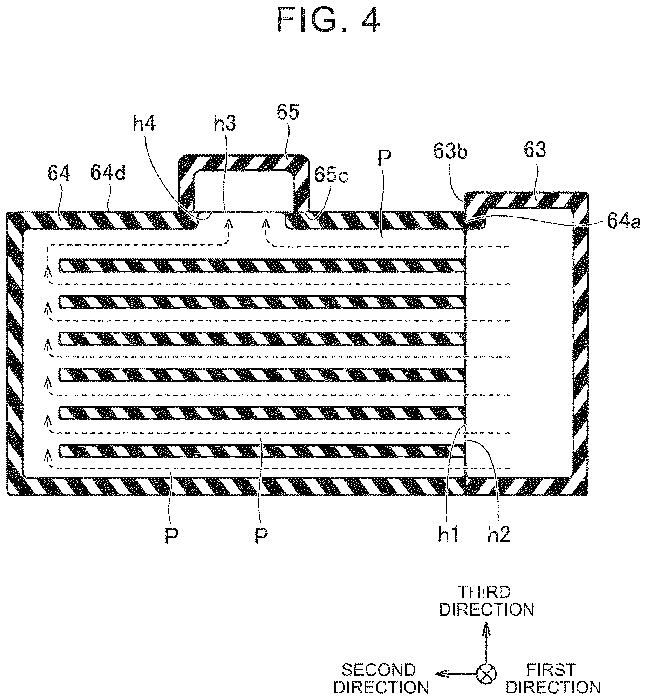

The energy storage device 100 will be described with reference to FIGS. 2 to 4. FIG. 2 is a schematic exploded perspective view of the energy storage device 100. FIG. 3 is a perspective view schematically showing an energy storage stack 11 from which a supply duct 63 and a discharge duct 65 shown in FIG. 2 have been removed. FIG. 4 is a diagram showing the flow of air through the supply duct 63, a resin frame 64, and the discharge duct 65. Dashed arrows in FIG. 4 indicate the flow of air.

Referring to FIG. 2, the energy storage device 100 includes the battery 10, the SMR 50, the cooling device 60, the camera 70, and the housing case 90.

The battery 10 includes two energy storage stacks 11, a pair of end plates 13A, 13B provided for each energy storage stack 11, and a restraining band 15 provided for each energy storage stack 11. The two energy storage stacks 11 may be connected in series with each other or may be connected in parallel with each other. The number of energy storage stacks 11 included in the battery 10 may be one or more.

Referring to FIGS. 2 and 3, each energy storage stack 11 includes a plurality of energy storage cells 12 arranged in a first direction. The energy storage cells 12 are connected in series. The energy storage cells 12 are disposed spaced apart in the first direction, and a resin frame 64 is disposed between adjacent energy storage cells 12 in the first direction. Each resin frame 64 is in contact with adjacent energy storage cells 12 in the first direction. The first direction is an example of the "arrangement direction" in the present disclosure. Each energy storage cell 12 includes a pair of external terminals 14A, 14B. One of the external terminals 14A, 14B is a positive terminal, and the other is a negative terminal. The energy storage cells 12 are, for example, secondary cells such as lithium-ion cells. The energy storage cells 12 are not limited to battery cells, and may be capacitors.

Each energy storage cell 12 is formed in a substantially rectangular parallelepiped shape extending in a second direction. The first direction corresponds to the thickness direction of the energy storage cell 12. The second direction corresponds to the width direction of the energy storage cell 12. A third direction corresponds to the height direction of the energy storage cell 12 and also corresponds to the upward direction in the vertical direction. The first direction, the second direction, and the third direction intersect each other. In the present embodiment, the first direction, the second direction, and the third direction are perpendicular to each other.

Referring to FIG. 2, each pair of end plates 13A, 13B is disposed on both sides of the corresponding energy storage stack 11 in the arrangement direction of the energy storage cells 12. The end plate 13B is located on a first-direction side relative to the end plate 13A.

Each restraining band 15 is connected to the corresponding pair of end plates 13A, 13B, and restrains the corresponding energy storage stack 11 from both sides in the arrangement direction of the energy storage cells 12. Referring to FIG. 3, a plurality of restraining bands 15 is provided for each energy storage stack 11. In the present embodiment, two restraining bands 15 are provided on each of the upper and lower surfaces of each energy storage stack 11.

Each restraining band 15 is made of metal and includes, for example, a steel sheet. In the present embodiment, each restraining band 15 includes a galvannealed steel sheet. The galvannealed steel sheet is an example of the "first member" in the present disclosure.

Each restraining band 15 includes a first portion 151 connected to one of the corresponding pair of end plates 13A, 13B, and a second portion 152 other than the first portion 151. In the present embodiment, the first portion 151 is a portion of the restraining band 15 that is connected to the end plate 13B.

In the first portion 151, the first member is exposed. In the second portion 152, the first member is covered with a second member different from the first member. In the present embodiment, in the first portion 151, the galvannealed steel sheet is exposed, and in the second portion 152, the galvannealed steel sheet is covered with a highly corrosion-resistant resin member. The highly corrosion-resistant resin member is an example of the "second member" in the present disclosure. Examples of a highly corrosion-resistant resin that may be employed include polyethylene (PE), polyamide, or acrylonitrile-butadienestyrene resin (ABS resin).

Referring to FIG. 2, the cooling device 60 draws cool air from the vehicle cabin 2 (see FIG. 1) into the housing case 90, and cools the battery 10 (more specifically, the energy storage stacks 11) with the air. That is, the cooling device 60 is a so-called air-cooling cooling device. The cooling device 60 is provided for each energy storage stack 11. Each cooling device 60 includes a supply pipe 61, a fan 62, a supply duct 63, a plurality of resin frames 64, a discharge duct 65, and a discharge pipe 66.

The supply pipe 61, the supply duct 63, the resin frames 64, the discharge duct 65, and the discharge pipe 66 function as an air passage. The supply pipe 61 provides communication between the vehicle cabin 2 (see FIG. 1) and the interior of the housing case 90. The fan 62 is, for example, a sirocco fan. The fan 62 draws air from the vehicle cabin 2 and discharges the air to the supply duct 63.

The supply duct 63 is formed to extend in the first direction and is in contact with the resin frames 64. Referring to FIG. 4, an opening h1 is formed in a surface 63b of the supply duct 63 that is in contact with the resin frames 64.

Referring to FIGS. 2 and 3, the resin frames 64 are arranged in the same direction as the arrangement direction of the energy storage cells 12. In the present embodiment, the resin frames 64 are arranged in the first direction. Each resin frame 64 is formed in a substantially rectangular parallelepiped shape extending in the second direction. Referring to FIG. 4, an opening h2 is formed in a surface 64a of the resin frame 64 that is in contact with the supply duct 63. The opening h1 and the opening h2 are aligned in the second direction. An opening h3 is formed in a surface 64d of the resin frame 64 that is in contact with the discharge duct 65. A flow path P connecting the opening h2 and the opening h3 is formed inside the resin frame 64.

Referring to FIG. 2, the discharge duct 65 is formed to extend in the first direction and is in contact with the resin frames 64. Referring to FIG. 4, an opening h4 is formed in a surface 65c of the discharge duct 65 that is in contact with the resin frames 64. The opening h3 and the opening h4 are aligned in the third direction. The discharge pipe 66 provides communication between the interior of the housing case 90 and the luggage compartment 3 (see FIG. 1).

Referring to FIGS. 1 and 2, when the fan 62 rotates, cool air in the vehicle cabin 2 is drawn into the housing case 90, and the battery 10 (more specifically, the energy storage stack 11) is cooled. Specifically, when the fan 62 rotates, cool air in the vehicle cabin 2 flows into the supply ducts 63 through the supply pipes 61. Referring to FIG. 4, air that has flowed into the supply duct 63 flows into the flow path P through the openings h1, h2. The air that has flowed into the flow path P flows into the discharge duct 65 through the openings h3, h4. Referring to FIGS. 1 and 2, the air that has flowed into the discharge ducts 65 is discharged to the luggage compartment 3 through the discharge pipes 66. The energy storage cells 12 are cooled as the cool air flows inside the resin frames 64 that are in contact with the energy storage cells 12.

Referring to FIG. 2, one camera 70 is provided in the housing case 90. The camera 70 is provided on a side wall 912b of the housing case 90. Referring to FIG. 3, the camera 70 captures an image of an imaging region R that is at least part of a surface of the restraining band 15. In the present embodiment, the imaging region R is located in the first portion 151. In the present embodiment, the camera 70 captures an image of the imaging region R for each restraining band 15. That is, in the present embodiment, the camera 70 captures an image of the imaging region R for each of all the restraining bands 15 included in the energy storage device 100.

The housing case 90 houses the battery 10, the SMR 50, the cooling device 60, and the camera 70. The housing case 90 includes a lower case 91 and an upper case 92 disposed above the lower case 91. The lower case 91 includes a bottom wall 911 and a peripheral wall 912 extending upward from the peripheral edge of the bottom wall 911. The peripheral wall 912 includes side walls 912a, 912b disposed spaced apart in the first direction, and side walls 912c, 912d disposed spaced apart in the second direction. The side wall 912b is disposed spaced apart from the side wall 912a in the first direction. The side wall 912d is disposed spaced apart from the side wall 912c in the second direction. The side wall 912c connects one end of the side wall 912a and one end of the side wall 912b, and the side wall 912d connects the other end of the side wall 912a and the other end of the side wall 912b.

Rust may occur in the restraining bands 15 due to moisture contained in the housing case 90. For example, humid air drawn from the vehicle cabin 2 may leak into the housing case 90 from connections between parts of the cooling device 60 (for example, a connection between the supply pipe 61 and the fan 62, a connection between the fan 62 and the supply duct 63, a connection between the supply duct 63 and the resin frames 64, a connection between the resin frames 64 and the discharge duct 65, and a connection between the discharge duct 65 and the discharge pipe 66), and rust may occur in the restraining bands 15 due to moisture contained in the air. Rust may also occur in the restraining bands 15 due to condensed water. If rust occurs in any of the restraining bands 15 and corrosion of the restraining band 15 progresses, the restraining band 15 may rupture. In particular, in salt-rich regions (for example, snowy regions or regions near the coast), the corrosion rate of zinc constituting the restraining bands 15 tends to increase. Since deicing agents contain salts such as sodium chloride, snowy regions are salt-rich regions like regions near the coast.

Therefore, in the present embodiment, the diagnostic device 8 (see FIG. 1) determines whether the restraining band 15 has deteriorated. Specifically, the ECU 500 (see FIG. 1) determines whether the restraining band 15 has deteriorated based on an image captured by the camera 70. In the present disclosure, a "state in which the restraining band has deteriorated" means a state in which the restraining band has not ruptured, but rust has occurred in the restraining band to such an extent that, if the restraining band continues to be used as-is, the restraining band may rupture.

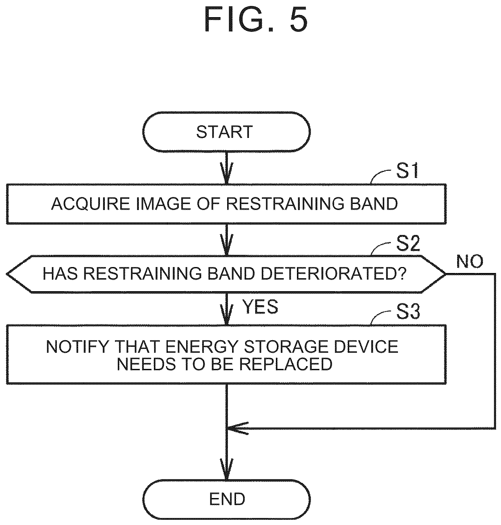

FIG. 5 is a flowchart showing determination processing executed by the ECU 500. The determination processing is executed when a predetermined condition is satisfied. As an example, the determination processing is executed when a start condition of the vehicle 1 is satisfied, that is, at startup of the vehicle 1. The startup of the vehicle 1 refers to when an SMR of the main battery (the SMR 50 in the present embodiment) is turned on. Each step (hereinafter abbreviated as "S") included in this flowchart is basically implemented by software processing by the ECU 500, but may be implemented by dedicated hardware (electrical circuitry) provided in the ECU 500.

First, in S1, the ECU 500 acquires, from the camera 70, an image of the imaging region R that is at least part of a surface of the restraining band 15. In the present embodiment, the ECU 500 acquires an image of the imaging region R for each restraining band 15 from the camera 70.

Next, in S2, the ECU 500 determines whether the restraining band 15 shown in the image of the imaging region R acquired in S1 has deteriorated based on the state of rust shown in the image. The state of rust includes an amount of rust. The state of rust may include a color of rust. The state of rust may include the amount of rust and the color of rust.

As an example, the ECU 500 determines whether the restraining band 15 shown in the image of the imaging region R acquired in S1 has deteriorated based on the amount of rust shown in the image. Specifically, the ECU 500 determines whether the restraining band 15 shown in the image of the imaging region R acquired in S1 has deteriorated based on the size of a region occupied by rust in the image. The size of the region occupied by rust in the image of the imaging region R acquired in S1 indicates the amount of rust. When the size of the region occupied by rust in the image of the imaging region R acquired in S1 is greater than or equal to a predetermined size, the ECU 500 determines that the restraining band 15 shown in the image has deteriorated. On the other hand, when the size of the region occupied by rust in the image of the imaging region R acquired in S1 is smaller than the predetermined size, the ECU 500 determines that the restraining band 15 shown in the image has not deteriorated.

The predetermined size is obtained in advance by an experiment and is stored in the memory 502. As an example of an experiment for obtaining the predetermined size, a test energy storage device equivalent to the energy storage device 100 is prepared, and an image showing the state of rust in a first portion of the restraining band when the restraining band is used up to the end of life (EOL) of the restraining band is acquired. The EOL is a service life beyond which continued use is not recommended. If the restraining band continues to be used beyond the EOL, the restraining band may rupture. That is, even if the restraining band reaches the EOL, the restraining band does not immediately rupture. The size of the region occupied by rust in an image obtained by such an experiment is stored in the memory 502 as the predetermined size.

As another example, the ECU 500 may determine whether the restraining band 15 shown in the image of the imaging region R acquired in S1 has deteriorated based on the color of rust shown in the image. As described above, in the present embodiment, the restraining band 15 includes a galvannealed steel sheet. At an initial stage of corrosion of the galvannealed steel sheet, due to sacrificial corrosion protection of zinc, only the zinc corrodes and the steel does not corrode. However, when corrosion of zinc progresses and steel begins to be exposed, the steel may also corrode. Rust produced by corrosion of zinc is white, whereas rust produced by corrosion of steel is reddish-brown.

When the color of rust shown in the image of the imaging region R acquired in S1 is a color indicating an initial stage of corrosion (for example, white), the ECU 500 determines that the restraining band 15 shown in the image has not deteriorated. On the other hand, when the color of rust shown in the image of the imaging region R acquired in S1 is a color indicating a stage in which corrosion has progressed (for example, reddish-brown), the ECU 500 determines that the restraining band 15 shown in the image has deteriorated.

As still another example, the ECU 500 may determine whether the restraining band 15 shown in the image of the imaging region R acquired in S1 has deteriorated based on the amount and color of rust shown in the image. Specifically, when the color of rust shown in the image of the imaging region R acquired in S1 is a color indicating an initial stage of corrosion (for example, white), and the size of the region occupied by rust in the image is smaller than the predetermined size, the ECU 500 determines that the restraining band 15 shown in the image has not deteriorated.

On the other hand, when the color of rust shown in the image of the imaging region R acquired in S1 is a color indicating an initial stage of corrosion (for example, white) and the size of the region occupied by rust in the image is greater than or equal to the predetermined size, the ECU 500 determines that the restraining band 15 shown in the image has deteriorated. When the color of rust shown in the image of the imaging region R acquired in S1 is a color indicating a stage in which corrosion has progressed (for example, reddish-brown), the ECU 500 determines that the restraining band 15 shown in the image has deteriorated.

When at least one restraining band 15 among all the restraining bands 15 included in the energy storage device 100 has deteriorated (YES in S2), the ECU 500 proceeds to S3. When none of the restraining bands 15 included in the energy storage device 100 has deteriorated (NO in S2), the ECU 500 ends the determination processing shown in FIG. 5.

In S3, the ECU 500 causes the HMI device 400 to notify that the energy storage device 100 needs to be replaced. In S3, the HMI device 400 notifies that the energy storage device 100 needs to be replaced. After S3, the ECU 500 ends the determination processing shown in FIG. 5.

As described above, the vehicle 1 according to the present embodiment includes the energy storage device 100 and the ECU 500. The energy storage device 100 includes the camera 70 that acquires an image of the imaging region R that is at least part of a surface of the restraining band 15. The ECU 500 determines whether the restraining band 15 has deteriorated based on the state of rust shown in the image. Occurrence of rust is a factor that causes deterioration of the restraining band 15. Therefore, according to the present embodiment, it is possible to determine whether the restraining band 15 has deteriorated.

In the present embodiment, the camera 70 is provided in the housing case 90. Therefore, according to the present embodiment, it is possible to determine whether the restraining band 15 has deteriorated without destroying the energy storage device 100.

In the present disclosure, a "state in which the restraining band has deteriorated" means a state in which the restraining band has not ruptured, but rust has occurred in the restraining band to such an extent that, if the restraining band continues to be used as-is, the restraining band may rupture. Therefore, according to the present embodiment, it is possible to suppress continued use of the restraining band until the restraining band ruptures.

The vehicle 1 according to the present embodiment includes the cooling device 60 that draws air from the vehicle cabin 2 to cool the energy storage stacks 11. Therefore, according to the present embodiment, the energy storage stacks 11 can be cooled.

The vehicle 1 according to the present embodiment includes the HMI device 400. When the ECU 500 determines that the restraining band 15 has deteriorated, the HMI device 400 notifies that the energy storage device 100 needs to be replaced. Therefore, according to the present embodiment, the driver of the vehicle 1 can know that the energy storage device 100 needs to be replaced. According to the present embodiment, it is possible to find an energy storage device in which the restraining band 15 has deteriorated but it is not determined, by capacity measurement of the energy storage cells 12, that replacement is required.

In the present embodiment, the imaging region R is located in the first portion 151 of the restraining band 15. Since the first member (for example, the galvannealed steel sheet) is exposed in the first portion 151, the first portion 151 rusts earlier than the second portion 152 in which the first member of the restraining band 15 is covered with the second member. That is, in the present embodiment, the imaging region R is located at a portion where rust is likely to occur. Therefore, according to the present embodiment, it is possible to detect deterioration of the restraining band 15 at an early stage.

In the present embodiment, the first portion 151 is a portion of the restraining band 15 that is connected to the end plate 13B, and the end plate 13B is located on a first-direction side relative to the end plate 13A. Air that has flowed into the supply duct 63 is warmed by heat of the energy storage cells 12 as it travels in the first direction within the supply duct 63. Therefore, in the housing case 90, the first-direction side is more easily warmed than the side opposite to the first direction, and the first portion 151 of the restraining band 15 that is connected to the end plate 13B is more likely to rust than a portion of the restraining band 15 that is connected to the end plate 13A. That is, in the present embodiment, the imaging region R is located at a portion where rust is likely to occur. Therefore, according to the present embodiment, it is possible to detect deterioration of the restraining band 15 at an early stage.

In the present embodiment, the determination processing is executed, for example, at startup of the vehicle 1. By executing the determination processing at startup of the vehicle 1, it is possible to suppress travel of the vehicle 1 in a state in which the restraining band 15 has deteriorated.

### First Modification

In the above embodiment, the vehicle 1 is a hybrid electric vehicle. However, the vehicle 1 may be any vehicle equipped with an energy storage device, and may be, for example, a battery electric vehicle (BEV). When the vehicle is a battery electric vehicle, the above determination processing may be executed, for example, when a power source of the vehicle is turned on. When the power source of the vehicle is turned on refers to when the SMR of the main battery is turned on. By executing the determination processing when the power source of the vehicle is turned on, it is possible to suppress travel of the vehicle 1 in a state in which the restraining band 15 has deteriorated. The determination processing may be executed when another predetermined condition is satisfied.

### Second Modification

In the above embodiment, the vehicle 1 includes, as the cooling device, the air-cooling cooling device 60. However, the cooling device may be a water-cooling cooling device. In general, when a vehicle is a battery electric vehicle, the cooling device is often a water-cooling cooling device. When the cooling device is a water-cooling cooling device, the cooling device does not have to be included in the energy storage device 100, and may be provided outside the housing case 90. The cooling device may be provided in the housing case 90 even when the cooling device is a water-cooling cooling device.

### Third Modification

In order to maintain the internal pressure of the housing case 90, the housing case 90 may be provided with a breathable waterproof membrane such as Gore-Tex (registered trademark). Gore-Tex allows water vapor to pass through. Therefore, when the housing case 90 cools, water vapor in the housing case 90 may liquefy and the restraining band 15 may rust. Even in such a case, the diagnostic device 8 according to the embodiment can determine whether the restraining band 15 has deteriorated.

### Fourth Modification

In the above embodiment, the imaging region R is located in the first portion 151 of the restraining band 15 that is connected to the end plate 13B. However, the imaging region R may be located at at least part of a surface of the restraining band 15. The imaging region R is preferably located at a portion of a surface of the restraining band 15 where the first member (for example, a galvannealed steel sheet) is exposed.

In the above embodiment, the camera 70 acquires images of the imaging region R for each of all the restraining bands 15 included in the energy storage device 100. However, the camera 70 may acquire images of the imaging region R for each of one or more restraining bands 15 among all the restraining bands 15 included in the energy storage device 100. In that case, when at least one restraining band 15 among the one or more restraining bands 15 has deteriorated, the ECU 500 determines YES in S2 and proceeds to S3. When none of the one or more restraining bands 15 has deteriorated, the ECU 500 determines NO in S2 and ends the determination processing shown in FIG. 5.

It is sufficient that the camera 70 be capable of acquiring an image of the imaging region R, and the number and positions of cameras 70 are not limited to those described in the above embodiment.

The camera 70 does not have to be included in the energy storage device 100 and may be provided outside the housing case 90. In that case, the camera 70 acquires an image of the imaging region R from outside the housing case 90 through a hole formed in the housing case 90.

### Fifth Modification

In the above embodiment, the diagnostic device 8 mounted on the vehicle 1 is described as an example of the diagnostic device for an energy storage device. However, the diagnostic device does not have to be mounted on a vehicle. When the diagnostic device is not mounted on a vehicle, the diagnostic device includes the camera 70 and a control device that executes the above determination processing. When the diagnostic device is not mounted on a vehicle, the diagnostic device can be used to determine whether a restraining band has deteriorated in an energy storage device (for example, a used battery) that is not mounted on a vehicle. In this case, the camera 70 acquires an image of an imaging region that is at least part of a surface of the restraining band (for example, an image showing the first portion 151 described above) from outside the housing case of the energy storage device through a hole formed in the housing case.

### Sixth Modification

In S2 of the determination processing, the ECU 500 may determine whether the restraining band 15 has deteriorated using artificial intelligence (AI) image recognition.

The embodiment and modifications disclosed herein should be considered to be illustrative in all respects and not restrictive. The scope of the present disclosure is set forth in the claims rather than in the above description, and is intended to include all modifications within the meaning and scope equivalent to those of the claims.

## Claims

1. A vehicle comprising:
an energy storage device;
a camera; and
a control device, wherein:
the energy storage device includes
a housing case,
an energy storage stack that is housed in the housing case and includes a plurality of energy storage cells arranged in an arrangement direction,
a pair of end plates disposed on both sides of the energy storage stack in the arrangement direction, and
a restraining band that is connected to the end plates and restrains the energy storage stack from both sides in the arrangement direction;
the camera is configured to acquire an image of an imaging region that is at least part of a surface of the restraining band; and
the control device is configured to determine whether the restraining band has deteriorated based on a state of rust shown in the image.

2. The vehicle according to claim 1, further comprising a cooling device configured to draw air from a vehicle cabin to cool the energy storage stack.

3. The vehicle according to claim 1 or 2, further comprising a notification device, wherein the notification device is configured to notify that the energy storage device needs to be replaced when the control device determines that the restraining band has deteriorated.

4. The vehicle according to claim 1 or 2, wherein:
the restraining band includes a first portion connected to one of the end plates and a second portion other than the first portion;
a first member is exposed in the first portion;
the first member is covered with a second member in the second portion; and
the imaging region is located in the first portion.

5. A diagnostic device for an energy storage device, wherein:
the energy storage device includes
a housing case,
an energy storage stack that is housed in the housing case and includes a plurality of energy storage cells arranged in an arrangement direction,
a pair of end plates disposed on both sides of the energy storage stack in the arrangement direction, and
a restraining band that is connected to the end plates and restrains the energy storage stack from both sides in the arrangement direction; and
the diagnostic device includes:
a camera configured to acquire an image of an imaging region that is at least part of a surface of the restraining band; and
a control device configured to determine whether the restraining band has deteriorated based on a state of rust shown in the image.
